Europäisches Patentamt

European Patent Office

Office européen des brevets

(11) Veröffentlichungsnummer: **0 572 888 B1**

(12) **EUROPÄISCHE PATENTSCHRIFT**

(45) Veröffentlichungstag der Patentschrift: **02.11.95**

(51) Int. Cl.⁶: **C01B 33/143**

(21) Anmeldenummer: **93108339.8**

(22) Anmeldetag: **24.05.93**

(54) **Verfahren zur kontinuierlichen Herstellung grosspartikulärer Kieselsole.**

(30) Priorität: **03.06.92 DE 4218306**

(43) Veröffentlichungstag der Anmeldung:
**08.12.93 Patentblatt 93/49**

(45) Bekanntmachung des Hinweises auf die
Patenterteilung:
**02.11.95 Patentblatt 95/44**

(84) Benannte Vertragsstaaten:
**DE ES FR GB IT NL SE**

(56) Entgegenhaltungen:
**EP-A- 0 170 578**
**EP-A- 3 440 175**
**US-A- 3 440 174**
**US-A- 3 538 015**
**US-A- 3 756 958**

(73) Patentinhaber: **BAYER AG**

**D-51368 Leverkusen (DE)**

(72) Erfinder: **Brekau, Uwe, Dr.**
**Jakob Böhme-Strasse 8**
**W-5000 Köln 80 (DE)**
Erfinder: **Block, Hans-Dieter, Dr.**
**Biesenbach 49**
**W-5090 Leverkusen 3 (DE)**
Erfinder: **Moretto, Hans-Heinrich, Dr.**
**Sürderstrasse 50**
**W-5090 Leverkusen (DE)**
Erfinder: **Schmidt, Peter, Dr.**
**Drosselweg 6**
**W-5090 Leverkusen 3 (DE)**
Erfinder: **Schober, Peter, Dr.**
**Mülheimer Strasse 93**
**W-5090 Leverkusen (DE)**
Erfinder: **Ludovici, Werner, Dr.**
**Grüner Weg 26**
**W-5068 Odenthal (DE)**

**Beschreibung**

Die Erfindung betrifft ein Verfahren zur Herstellung von Kieselsolen mit nicht aggregierten, sphärischen $SiO_2$-Partikeln eines mittleren Durchmessers von 27 - 72 nm, bei dem eine saure, aktive Lösung eines Silikates bei atmosphärischem Druck einem alkalischen Kieselsol kontinuierlich zugeführt wird.

Für viele industrielle Anwendungen, wie z.B. als Hochtemperatur-Bindemittel werden stabile, $SiO_2$-haltige Produkte in Form von Solen, sogenannte Kieselsole, benötigt. Der aktive Inhaltsstoff des Produktes, das $SiO_2$, muß in einer relativ hohen Konzentration in Form von diskreten, sphärischen, nicht aggregierten Partikeln vorliegen. Der Vorteil eines solchen Produktes, in dem der wirkende Inhaltsstoff in hohen Konzentrationen vorliegt, ist offensichtlich: Transport- und Lagerkosten beispielsweise stehen in umgekehrtem Verhältnis zur $SiO_2$-Konzentration des Produktes.

In jüngster Zeit besteht eine gesteigerte Nachfrage nach Kieselsolen mit einem großen mittleren Partikeldurchmesser (> 25 nm). In vielen Anwendungen, z.B. bei der Polierung von Silicium-Wafern, korreliert die Effektivität des Produktes mit der Partikelgröße der Kieselsolteilchen, die im flüssigen Träger kolloidal dispergiert sind. Bisher gibt es jedoch kein Verfahren, welches die direkte Herstellung derartiger Partikelgrößen (> 25 nm) aus saurem Frischsol in einfacher und wirtschaftlich vorteilhafter, kontinuierlicher Verfahrensweise in einfachen, drucklosen Apparaten gestattet.

Entsprechend der gesteigerten Bedeutung der großpartikulären Kieselsole sind viele Versuche unternommen worden, geeignete Herstellvarfahren zur Verfügung zu stellen. Als Ergebnisse dieser Bemühungen sind Produkte mit mittleren Partikeldurchmessern bis 36 nm in den Handel gekommen. Zur Herstellung dieser Partikel mußte man jedoch zunächst umständliche, mehrstufige Verfahren durchführen, bei denen ein alkalisches Vorprodukt, das seinerseits zuvor aus saurem Frischsol hergestellt wurde, nachbehandelt werden mußte.

So wurde beispielsweise zur Herstellung großpartikulärer Produkte ein kleinparticuläres, alkalisches Kieselsol in verdünnter Form (2-20 Gew.-% $SiO_2$) bei 138-370°C in diskontinuierlicher Verfahrensweise unter Druck behandelt (US 3 012 972). Ebenfalls eine Nachbehandlung eines alkalischen Kieselsols in diskontinuierlicher Verfahrensweise bei hohen Drücken und Temperaturen beschreibt US 4 356 107.

Ein kontinuierliches Verfahren wird in US 2 680 721 beansprucht. In diesem Verfahren wird ein alkalisches, kleinpartikuläres Kieselsol in einer Durchlaufdruckschleife für eine aus Batch-Versuchen bekannte Zeitspanne auf Temperaturen zwischen 160°C und 300°C erhitzt.

Die Nachteile der vorbeschriebenen Verfahren sind der durch die Anwendung von Druck und hohen Temperaturen bedingte hohe apparative Aufwand und die umständliche, über mehrere Produktstufen ablaufende Arbeitsweise.

Einen wesentlichen Fortschritt brachten die Verfahren, die sich der Zugabe von saurem Frischsol zu vorgelegtem, alkalischen Kieselsol bedienten. Dabei spart man gegenüber den vorstehend beschriebenen Verfahren den Schritt der separaten Erzeugung des kleinpartikulären, alkalischen Kieselsols ein.

So beschreibt DE-OS 1 667 645 die Herstellung eines Kieselsols mit einem mittleren Partikeldurchmesser von 15-150 nm und einem $SiO_2$-Gehalt von 45-55 Gew.-%. Hierzu wird aus einer wäßrigen, alkalischen Lösung bei erhöhtem Druck (472-9443 kPa) Wasser verdampft, wobei gleichzeitig zur Aufrechterhaltung eines konstanten Volumens ein saures, aktives Kieselsol, welches Partikel eines mittleren Durchmessers unterhalb von 5 nm enthält, zugegeben wird.

Aus DE-OS 16 67 675 geht ein diskontinuierliches Herstellverfahren von Kieselsolen mit geringem Natriumeinschluß und erhöhter Partikelgröße hervor. In diesem Verfahren wird saures Frischsol in die Vorlage eines alkalischen Kieselsols gegeben, und Natriumsilikatlösung wird so zugeführt, daß der pH-Wert zwischen 8,8 und 9,5 liegt. Die Konzentrierung erfolgt durch Wasserverdampfung.

Es sind auch erfolgreiche Versuche zur Erzeugung von großpartikulärem Kieselsol aus saurem Frischsol bei atmosphärischem Druck unternommen worden. US 3 440 174, US 3 673 104 und US 3 947 376 beschreiben einstufige, diskontinuierliche Verfahren zur Herstellung von alkalischen Kieselsolen in bevorzugt wäßrigem Medium mit einem $SiO_2$-Gehalt von mindestens 35 Gew.-%. Die $SiO_2$-Partikel in den dort beschriebenen Verfahren weisen mittlere Partikeldurchmesser von 45 - 100 nm auf, sind sphärisch und nicht aggregiert.

Ein Nachteil dieser Verfahren ist, daß das Vorlagesol in sehr verdünnter Konzentration eingesetzt wird und somit lange Reaktionszeiten und große Energiemengen zur Erreichung handelsüblicher Konzentrationen notwendig sind. Ein weiterer Nachteil ist die wirtschaftlich nicht vorteilhafte diskontinuierliche Arbeitsweise,

Da sich im Laufe des diskontinuierlichen Prozesses die Konzentrationen an $SiO_2$, an aktivem Silikat und an Natriumionen, der pH-Wert und die Korngröße ständig ändern, ist eine Übertragung dieser Verfahrensweise auf eine kontinuierliche Arbeitsweise mit den für einen kontinuierlichen Prozeß kennzeichnenden zeitlich unveränderten Betriebszustandparametern nicht möglich und demzufolge weder durchgeführt noch beschrieben.

Wegen der enormen wirtschaftlichen und technischen Vorteile eines kontinuierlichen, drucklosen Verfahrens sind Versuche durchgeführt worden, solche kontinuierlichen Verfahren zur Verfügung zu stellen. Es ist aber noch nicht gelungen, kontinuierlich großpartikuläre Kieselsole in einfacher Weise herzustellen.

Kontinuierliche Verfahren zur Herstellung von Kieselsol aus saurem Frischsol sind beispielsweise in US 3 440 175 beschrieben. Hier werden Kieselsole mit Teilchen bis zu einem Durchmesser von maximal 40 nm hergestellt. Auch in der US 2 574 902 wird kurz eine kontinuierliche Arbeitsweise beschrieben, ohne jedoch auf die Verfahrensparameter näher einzugehen.

Es ist also bisher nicht möglich gewesen, nach einem einfachen, drucklosen, kontinuierlichen Verfahren direkt aus saurem Frischsol alkalisch eingestellte Kieselsole vorherbestimmbarer, mittlerer Korngröße von 25 - 75 nm herzustellen.

Aufgabe war es daher, ein kontinuierliches Verfahren zur Verfügung zu stellen, das die wirtschaftliche Herstellung von größeren Mengen an Kieselsolen definierter, vorherbestimmbarer, mittlerer Korngröße von 25 - 75 nm erlaubt, bei dem die oben bereits erwähnten Nachteile der bekannten Verfahren wie hohe Temperaturen und Drücke, lange Reaktionszeiten, hochverdünnte Lösungen und komplizierte, diskontinuierliche Arbeitsweise nicht auftreten und das eine einfache Parametereinstellung bei der Herstellung großpartikulärer Kieselsole gestattet. Diese Aufgabe konnte mit dem erfindungsgemäßen Verfahren gelöst werden.

Gegenstand der Erfindung ist ein kontinuierliches Verfahren zur Herstellung wäßriger, alkalischer Kieselsole, die nicht aggregierte kugelförmige $SiO_2$-Partikel mit einem mittleren Durchmesser von 27-72 nm enthalten, aus saurem Frischsol, welches 4-8 Gew.-% $SiO_2$ in Form von Teilchen mit einem mittleren Teilchendurchmesser von ca. 2 nm bei einem pH-Wert von 2-4 enthält und welches durch Zusammenbringen einer Alkalisilikatlösung mit einem Kationenaustauscherharz in der H-Form hergestellt wurde, dieses saure Frischsol zu einer Vorlage gegeben wird, die eine wäßrige, alkalische, kolloidale Kieselsollösung mit einem pH-Wert von >8, einem $SiO_2$-Gehalt von 2-20 Gew.-% und einer durchschnittlichen Partikelgröße von 14-27 nm enthält, dieser Vorlage bei Temperaturen in der Nähe des Siedepunktes der Vorlage gleichzeitig alkalische Agenzien zugesetzt werden und die Menge an alkalischen Agenzien so bemessen wird, daß der pH-Wert während des gesamten Verfahrens nicht unter 8 fällt, und der Zusatz an saurem Frischsol und alkalischen Agenzien solange fortgesetzt wird, bis die Partikel einen mittleren Durchmesser von 27-72 nm aufweisen und eine Konzentrierung der so hergestellten, wäßrigen, alkalischen Kieselsole erfolgt, welches dadurch gekennzeichnet ist, daß

a) das saure Frischsol den Reaktoren einer mehrstufigen Reaktionskaskade kontinuierlich zugeführt wird, wobei die erste Stufe die Vorlage enthält und der jeweils nächste Reaktor der Kaskade durch Überlauf aus dem vorangehenden versorgt wird, und der pH-Wert in den Reaktoren nicht unter 8 fallen darf,
b) dem ersten oder den ersten der Reaktoren alkalische Agenzien, vorzugsweise alkalische Natriumsilikatlösung, alkalische Kaliumsilikatlösung, Natronlauge, Kalilauge, kontinuierlich in einer Menge zugeführt werden, so daß sich in den damit beschickten Reaktoren ein pH-Wert von 8 bis 12,5 einstellt,
c) die mittleren Verweilzeiten in den mit saurem Frischsol beschickten Stufen der Reaktionskaskade so eingestellt werden, daß eine mittlere Partikelgröße von 27-72 nm im letzten Reaktor der Kaskade enthalten wird.

In den Reaktoren werden stationäre Betriebszustände während der erfindungsgemäßen Durchführung des Verfahrens eingestellt, wobei diese Zustände in einer Kaskade mit z.B. fünf Reaktoren, bevorzugt wie folgt aussehen:

|  | pH-Wert | mittlere Partikelgröße [nm] | mittlere Verweilzeit [h] | $SiO_2$-Konzentration [Gew.-%] |
|---|---|---|---|---|
| erster Reaktor | 10,7-11,7 | 14-27 | 0,5-2 | 9-16 |
| zweiter Reaktor | 9,8-11,3 | 15-41 | 0,5-2 | 11-30 |
| dritter Reaktor | 9,9-10,8 | 18-49 | 0,5-2 | 16-40 |
| vierter Reaktor | 9,4-10,5 | 20-68 | 1,5-2 | 22-45 |
| fünfter Reaktor | 9,0-10,5 | 27-72 | 1,5-2 | 28-50 |

Die Konzentration in den Reaktoren werden durch Verdampfung einer Wassermenge, die geringer als die zugeführte ist, eingestellt.

Für den bevorzugten Arbeitstemperaturbereich, am Siedepunkt des Wassers, wird die benötigte mittlere Verweilzeit in allen mit Frischsol beschickten Reaktoren zur Erreichung der gewünschten spezifischen Oberfläche durch die Beziehung:

Verweilzeit [in Stunden] = 14,5 - 1/9 (spezifische Oberfläche [in $m^2/g$]) festgelegt.

Ausgangsverbindungen für das erfindungsgemäße Verfahren sind saures Frischsol und alkalische Agenzien. Die im erfindungsgemäßen Verfahren einzusetzenden sauren Frischsole haben normalerweise mittlere Partikeldurchmesser unterhalb von 5 nm, pH-Werte vorzugsweise zwischen 2 und 3 und $SiO_2$-Konzentrationen von 4-8 Gew.-%, vorzugsweise von 6,0 bis 6,3 Gew.-%. Zur Herstellung besagter kleinpartikulärer, saurer Frischsole wird die Behandlung von entsprechend verdünnter Natronwasserglaslösung mit stark sauren Kationenaustauscherharzen, wie in US 2 244 325 und US 3 468 813 beschrieben, durchgeführt.

Obwohl die in den US Patentschriften beschriebene Verfahrensweise zur Herstellung der sauren Frischsole zu bevorzugen ist, kann jede andere geeignete Methode zur Herstellung eines sauren Kieselsols mit der geforderten Partikelgröße und dem gewünschten pH-Wert durchgeführt werden.

Die mittlere Partikelgröße D der Teilchen ist aus der nach G.W. Sears bestimmten spezifischen Oberfläche O (Analytical Chemistry, Band 28, S. 1981-1983, Jahrgang 1956) gemäß der nachfolgenden Formel zu errechnen (vgl. R.K. Iler, "The Chemistry of Silica" Wiley, New York 1979).

$$D = \frac{6}{f * O} * 1000$$

Dabei ist D der mittlere Durchmesser einer Oberflächenverteilung in nm, O die spezifische Oberfläche in $m^2/g$ und f die Dichte der $SiO_2$-Partikel in g/ml. Zur Vereinfachung ist mit der idealen Dichte von amorphem $SiO_2$ von 2,2 g/ml zu rechnen.

Im erfindungsgemäßen Verfahren ist die Schaffung räumlich getrennter, stationärer Zustände bezüglich pH-Wert, mittlerer Partikelgröße, $Na_2O$-Gehalt und $SiO_2$-Konzentration in Form von Reaktoren einer mehrstufigen Apparatur für die Durchführung sehr wichtig.

Ein weiterer wichtiger Parameter des Verfahrens ist die mittlere Verweilzeit in diesen Reaktoren. Von besonderer Bedeutung ist die Verweilzeit in jenen Reaktoren, in denen Frischsol zugegeben wird, da dort der Aufwachsvorgang zu größeren Partikeln bevorzugt abläuft. Die mittlere Verweilzeit wird durch die verdampfte bzw. zu verdampfende Wassermenge und durch die Frischsolzugabe in die jeweiligen Reaktoren gesteuert.

Die Apparatur, die im erfindungsgemäßen Verfahren Anwendung findet, besteht aus mehreren, mindestens 2, hintereinander angeordneten und miteinander verbundenen Überlaufreaktoren. Der Inhalt jedes Reaktionsgefäßes wird durchmischt. Aus den Reaktoren werden durch geeignete Wärmequellen definierte Destillatmengen abgeführt. Mit Dosiervorrichtungen erfolgt die Zugabe der Einsatzstoffe Frischsol und alkalisches Agenz in die Reaktoren, zumindest in die ersten zwei in Richtung des Materialflusses stehenden Reaktoren.

Um die Lagerstabilität, d.h. die Zeitdauer der Lagerfähigkeit des sauren Frischsols zu erhöhen, ist eine Kühlung besagter Lösung auf Temperaturen von 0-15°C, vorzugsweise von 4-10°C vorteilhaft anzuwenden.

Zur Gewährleistung eines definierten pH-Wertes und der Vermeidung der Gelierung ist im Verlaufe des Verfahrens alkalisches Agenz zuzusetzen. Die Zugabe kann in alle Reaktoren erfolgen, vorzugsweise aber in den ersten. Als Agenz wird eine Metallhydroxid- oder Metallsilikatlösung, vorzugsweise Natriumsilikat-, Kaliumsilikatlösung, Natronlauge oder Kalilauge, verwendet. Die Natriumsilikatlösung - beispielsweise mit 27 Gew.-% $SiO_2$ und 8 Gew.-% $Na_2O$ entsprechend einem Gewichtsverhältnis $SiO_2:Na_2O$ von ca. 3,35 - ist zur besseren Handhabung mit deionisiertem Wasser zu verdünnen. Die Verdünnung ist vorzugsweise bis auf einen Gehalt von ca. 6 Gew.-% $SiO_2$ vorzunehmen.

Beim Anfahren der Reaktorskaskade müssen die vorab beschriebenen und für die Erfindung kennzeichnenden stationären Zustände bezüglich pH-Wert, mittlere Verweilzeit, Partikelgröße und $SiO_2$-Konzentration eingestellt werden. Zum Anfahren ist es nicht nötig, alle Reaktoren der mehrstufigen Apparatur mit geeigneten Vorlagesolen zu befüllen. Es ist ausreichend im 1. Reaktor ein geeignetes Vorlagesol zu haben oder zu erzeugen.

Durch das erfindungsgemäße Verfahren werden konzentrierte, wäßrige, stabile, alkalische Kieselsole, die über 30 Gew.-% $SiO_2$ enthalten können, hergestellt. Die Partikel der aus dem erfindungsgemäßen Verfahren erhältlichen Kieselsole sind groß, kugelförmig, einheitlich und nicht aggregiert.

Untersuchungen der im erfindungsgemäßen Verfahren hergestellten Kieselsole zeigen, daß diese Produkte Viskositäten unterhalb von 10 mPas, gemessen mit einem Höppler Kugelfallviskosimeter bei einer Temperatur von 20°C und einem $SiO_2$-Gehalt von 30 Gew.-% aufweisen. Die hergestellten Produkte haben eine Viskosität von 1,5 -9 mPas, einen pH-Wert zwischen 8 und 10,5 und einen $Na_2O$-Gehalt in Lösung <

0,1 Gew.-%. Die Kieselsole sind bei +80°C für mindestens 10 Wochen ohne Veränderung der Viskosität lagerstabil.

Im folgenden wird die Erfindung anhand von Beispielen näher erläutert, wobei die Erfindung nicht auf die nachgenannten Beispiele beschränkt ist.

Beispiel 1

Die Apparatur, die hier und in den folgenden Beispielen Anwendung findet, besteht aus fünf hintereinander angeordneten und miteinander verbundenen Überlaufreaktoren aus Glas. Der Inhalt der Reaktoren ist bei Siedetemperatur bis zum Überlauf gemessen und beträgt für Reaktor 1:783 ml, für Reaktor 2:617 ml, für Reaktor 3:644 ml, für Reaktor 4:1174 ml und für den fünften Reaktor 1308 ml.

Der Inhalt jedes Reaktionsgefäßes wird mit Propellerrührer durchmischt. Die Beheizung des Reaktorinhaltes erfolgt indirekt mit Dampf. Zu diesem Zwecke sind im Innern der Reaktoren dampfdurchsträmte Metallschlangen aus VA-Stahl angebracht. Die Brüden werden über einen Wasserkühler geführt, kondensiert und anschließend gemessen. Der Dampfdruck des Heizdampfes, mit dem die aus den einzelnen Reaktoren abzudestillierende Wassermenge zu regulieren ist, wird mit einem geeigneten Nadelventil und einem entsprechenden Kondensatabscheider auf einem konstanten Wert gehalten.

Die Heizschlangen der Reaktoren sind in Parallelschaltung an eine Hauptdampfleitung angeschlossen. Jedes der vorab beschriebenen fünf Reaktionsgefäße ist mit einem eigenen Kondensatabscheider versehen, um aus jedem der Reaktoren festgelegte unterschiedliche Wassermengen verdampfen zu können.

In jeden der fünf Reaktoren wird mit einer Zugabevorrichtung eine wie beispielsweise in US 2 244 325 hergestellte Lösung von saurem Frischsol gegeben. Die Zugabevorrichtung ist so gewählt, daß die Zugabe auch in einzelne, ausgewählte Reaktoren erfolgen kann. Mit einer Dosiervorrichtung ist ebenso die Zugabe der alkalischen Agenzlösung, wie z.B. Metallhydroxid- oder Metallsilikatlösung, vorzugsweise einer Lösung von Natriumsilikat, in alle Reaktoren möglich.

Um die Lagerstabilität, d.h. die Zeitdauer der Lagerfähigkeit der sauren Lösung des aktiven Silikates zu erhöhen, wird besagte Lösung von Kieselsäurefrischsol auf Temperaturen von 4-10°C gekühlt.

Der stationäre Zustand in den fünf Reaktoren ist bei einer mittleren Verweilzeit von 1,8 h im 1. Reaktor, 1,7 h im 2. und 3. Reaktor und 2 h im 4. und 5. Reaktor durch die Zugabe von 960 ml Kieselsäurefrischsol mit 6 Gew.-% $SiO_2$ pro Stunde in jeden der fünf Reaktoren und 105 ml verdünnter alkalischer Natronwasserglaslösung pro Stunde (mit 6 Gew.-% $SiO_2$) in Reaktor 1 und durch Verdampfung der folgenden Wassermengen: 634 ml/h im 1. Reaktor, 1030 ml/h im 2. Reaktor, 950 ml/h im 3. Reaktor, 737 ml/h im 4. Reaktor und 900 ml/h im 5. Reaktor aufrecht zu erhalten. Die mittlere Gesamtverweilzeit beträgt demnach 9.2 h.

Im stationären Betriebszustand der kontinuierlich arbeitenden Apparatur ergeben sich dann für alle fünf Reaktoren spezifische pH-Werte. Der pH-Wert beträgt in Reaktor 1:11,2, in Reaktor 2:10,8, im 3. Reaktor 10,3 und im vierten und fünften Reaktor jeweils 9,9. Die $SiO_2$-Konzentrationen in den Solen im stationären Zustand betragen im 1. Reaktor 14 Gew.-%, im 2. Reaktor 29 Gew.-%, in Reaktor 3:39 Gew.-%, in Reaktor 4:34 Gew.-% und in Reaktor 5 : 37 Gew.-%.

Die spezifische Oberfläche des Sols stellt sich ein im 1. Reaktor auf 172 $m^2$/g, im 2. Reaktor auf 92 $m^2$/g, im 3. Reaktor auf 69 $m^2$/g, im 4. Reaktor auf 54 $m^2$/g und im 5. Reaktor auf 53 $m^2$/g (entsprechend einem mittleren Partikeldurchmesser von 51 nm).

Die spezifische Oberfläche des während insgesamt 80 Betriebsstunden unter diesen Bedingungen erhaltenen Kieselsols lag bei ca. 50 $m^2$/g. Der pH-Wert betrug 9,9, die Viskosität betrug 3,5 mPas bei 20°C und 30 Gew.-% $SiO_2$.

Beispiel 2

Der stationäre Zustand in den 5 Reaktoren wird bei einer mittleren Verweilzeit von 1,9 h im 1. Reaktor, 0,8 h im 2. Reaktor, 0,7 h im 3. Reaktor und 0,9 h im 4. Reaktor sowie 2,1 h im 5. Reaktor aufrecht erhalten. Die mittlere Gesamtverweilzeit in allen Reaktoren beträgt 6,4 h.

Zur Einstellung der Verweilzeiten werden 963 ml/h Kieselsäurefrischsol mit 6 Gew.-% $SiO_2$ in den 1. Reaktor, 1277 ml/h in den 2. Reaktor, 1259 ml/h in den 3. und 1293 ml/h in den 4. Reaktor gegeben. Ferner werden folgende Wassermengen aus den Reaktoren abgedampft: 651 ml/h aus Reaktor 1, 952 ml/h aus Reaktor 2, 1125 ml/h aus Reaktor 3, 807 ml/h aus Reaktor 4 und 738 ml/h aus Reaktor 5. 106 ml/h Natronwasserglaslösung mit 6 Gew.-% $SiO_2$ werden in den 1. Reaktor dosiert.

Die $SiO_2$-Konzentrationen in der Anlage betragen im 1. Reaktor 15 Gew.-%, im 2. Reaktor 18 Gew.-%, im 3. Reaktor 23 Gew.-%, im 4. Reaktor 20 Gew.-% und im 5. Reaktor 39 Gew.-%.

Das unter diesen Versuchsbedingungen hergestellte Produkt hat eine spezifische Oberfläche von 75 $m^2/g$ (entsprechend einem mittleren Partikeldurchmesser von 36 nm), einen pH-Wert von 9,5, einen $SiO_2$-Gehalt von 39 Gew.-% und eine bei 20°C gemessene Viskosität von 3,5 mPas bei 30 Gew.-% $SiO_2$. Mit einem $Na_2O$-Gehalt von wengier als 0,1 Gew.-% ist das Produkt alkaliarm.

Zum Anfahren der Reaktionskaskade wird jeweils der erste Reaktor mit dem aufbewahrten Inhalt des ersten Reaktors der letzten Fahrperiode zur Herstellung der Kieselsole nach Beispiel 1 oder 2 befüllt.

Durch Zugabe der Frischsol- und Natronwasserglasmengen und durch Abdampfen der definierten Mengen Wassers wird der stationäre Betriebszustand nach Beispiel 1 (Vorlagesol aus Beispiel 1) oder Beispiel 2 (Vorlagesol aus Beispiel 2) eingestellt und durch Überlauf der 2. Reaktor befüllt. Ist der zweite Reaktor befüllt, wird hier der stationäre Betriebszustand eingestellt und durch Überlauf der nächstfolgende Reaktor befüllt usw. Auf diese Weise werden alle fünf Reaktoren der Kaskade befüllt und geeignete Vorlagesole in allen Reaktoren hergestellt.

Beispiel 3 (Herstellung der Vorlage)

Das Kieselsol Levasil 100/30® (Hersteller: BAYER AG, Leverkusen) mit einem $SiO_2$-Gehalt von 30 -31 Gew.-% $SiO_2$, einem pH-Wert von 9,5-10,5, einer Viskosität von < 3 mPas, einer Dichte von 1,202-1,210 g/ml, einer spezifischen Oberfläche von 100-135 $m^2/g$ und einer Alkalität von 0,12 - 0,18 Gew.-% $Na_2O$ wird mit deionisiertem Wasser auf einen $SiO_2$-Gehalt von 2,3-Gew.-% $SiO_2$ verdünnt. 10,960 l dieser Verdünnung werden unter Rühren bei Raumtemperatur mit 220 ml konzentrierter Natronwasserglaslösung mit 27 Gew.-% $SiO_2$ und 8,0 Gew.-% $Na_2O$ entsprechend einem Gewichtsverhältnis $SiO_2$:$Na_2O$ von ca. 3,35 versetzt.

Das so hergestellte Vorlagesol wird in den 1. Reaktor der fünfstufigen Reaktionskaskade eingefüllt. Anschließend wird zur Einstellung des stationären Betriebszustandes im 1. Reaktor pro Stunde eine definierte Wassermenge verdampft und eine genau festgelegte Menge Kieselsäurefrischsol (6 Gew.-% $SiO_2$ enthaltend) und Natronwasserglaslösung zugegeben. Durch Überlauf wird der zweite Reaktor befüllt und danach dort der stationäre Betriebszustand hinsichtlich pH-Wert, mittlerer Verweilzeit, Partikelgröße und $SiO_2$-Konzentration durch Zugabe einer definierten Frischsolmenge pro Stunde und Abdestillieren einer definierten Wassermenge eingestellt. Durch Überlauf wird der nächstfolgende Reaktor befüllt usw. Die Destillat- und Frischsolmengen, die zur Einstellung der stationären Betriebszustände nötig sind, sind den nachfolgenden beiden Tabellen 1 und 2 zu entnehmen, ebenso wie die spezifische Oberfläche eines nach maximal 5 mittleren Verweilzeiten unter diesen Bedingungen erhaltenen Kieselsols und weiteren, den stationären Betriebszustand charakterisierenden Kenngrößen.

6

Tabelle 1

| Reaktor | Destillat [ml/h] | Frischsol [ml/h] | pH-Wert | SiO$_2$-Gehalt [Gew.-%] | BET [m$^2$/g] |
|---|---|---|---|---|---|
| 1 | 634 | 960 | 11,2 | 14 | 172 |
| 2 | 1030 | 960 | 10,8 | 29 | 92 |
| 3 | 950 | 960 | 10,3 | 39 | 69 |
| 4 | 737 | 960 | 9,9 | 34 | 54 |
| 5 | 900 | 960 | 9,9 | 37 | 53 |

Zugabe zum Reaktor 1: 105 ml/h Natronwasserglaslösung, 6 Gew.-% SiO$_2$ enthaltend

Tabelle 2

| Reaktor | Destillat [ml/h] | Frischsol [ml/h] | SiO$_2$-Konzentration [Gew.-%] |
|---|---|---|---|
| 1 | 651 | 963 | 15 |
| 2 | 952 | 1277 | 18 |
| 3 | 1125 | 1259 | 23 |
| 4 | 807 | 1293 | 20 |
| 5 | 738 | - | 39 |

Zugabe zum Reaktor 1: 106 ml/h Natronwasserglaslösung, 6 Gew.-% SiO$_2$ enthaltend, Verhältnis SiO$_2$:Na$_2$O = 1:3,3.

## Patentansprüche

1. Kontinuierliches Verfahren zur Herstellung wäßriger, alkalischer Kieselsole, die nicht aggregierte kugelförmige SiO$_2$-Partikel mit einem mittleren Durchmesser von 27-72 nm enthalten, aus saurem Frischsol,

7

welches 4-8 Gew.-% SiO$_2$ in Form von Teilchen mit einem mittleren Teilchendurchmesser von ca. 2 nm bei einem pH-Wert von 2-4 enthält und welches durch Zusammenbringen einer Alkalisilikatlösung mit einem Kationenaustauscherharz in der H-Form hergestellt wurde, dieses saure Frischsol zu einer Vorlage gegeben wird, die eine wäßrige, alkalische, kolloidale Kieselsollösung mit einem pH-Wert von >8, einem SiO$_2$-Gehalt von 2-20 Gew.-% und einer durchschnittlichen Partikelgröße von 14-27 nm enthält, dieser Vorlage bei Temperaturen in der Nähe des Siedepunktes der Vorlage gleichzeitig alkalische Agenzien zugesetzt werden und die Menge an alkalischen Agenzien so bemessen wird, daß der pH-Wert während des gesamten Verfahrens nicht unter 8 fällt, und der Zusatz an saurem Frischsol und alkalischen Agenzien solange forgesetzt wird, bis die Partikel einen mittleren Durchmesser von 27-72 nm aufweisen und eine Konzentrierung der so hergestellten, wäßrigen, alkalischen Kieselsole erfolgt, dadurch gekennzeichnet, daß

a) das saure Frischsol den Reaktoren einer mehrstufigen Reaktionskaskade kontinuierlich zugeführt wird, wobei die erste Stufe die Vorlage enthält und der jeweils nächste Reaktor der Kaskade durch Überlauf aus dem vorangehenden versorgt wird, und der pH-Wert in den Reaktoren nicht unter 8 fallen darf,

b) dem ersten oder den ersten der Reaktoren alkalische Agenzien, vorzugsweise alkalische Natriumsilikatlösung, alkalische Kaliumsilikatlösung, Natronlauge, Kalilauge, kontinuierlich in einer Menge zugeführt werden, so daß sich in den damit beschickten Reaktoren ein pH-Wert von 8 bis 12,5 einstellt,

c) die mittleren Verweilzeiten in den mit saurem Frischsol beschickten Stufen der Reaktionskaskade so eingestellt werden, daß eine mittlere Partikelgröße von 27-72 nm im letzten Reaktor der Kaskade erhalten wird.

## Claims

1.  A continuous process for the preparation of aqueous, alkaline silica sols which contain non-aggregated, spherical SiO$_2$ particles with an average diameter of 27-72 nm, from an acidic fresh sol which contains 4-8 wt.% of SiO$_2$ in the form of particles with an average particle diameter of ca. 2 nm at a pH of 2-4 and which was produced by bringing into contact an alkali metal silicate solution and a cationic ion exchanger resin in the H form, by adding this acidic fresh sol to a stock which contains an aqueous, alkaline, colloidal silica sol solution with a pH of >8, an SiO$_2$ content of 2-20 wt.% and an average particle size of 14-27 nm, simultaneously adding alkaline agents to this stock at temperatures near to the boiling point of the stock and adjusting the amount of alkaline agents in such a way that the pH does not drop below 8 during the entire process, and continuing the addition of acidic fresh sol and alkaline agents until the particles have an average diameter of 27-72 nm and then concentrating the aqueous, alkaline silica sols prepared in this way, characterised in that

a) the acidic fresh sol is continuously added to the reactors in a multi-stage reaction cascade, wherein the first stage contains the stock and each of the subsequent reactors in the cascade is supplied by the overflow from the preceding reactor and the pH in the reactors is not allowed to drop below 8,

b) alkaline agents, preferably alkaline sodium silicate solution, alkaline potassium silicate solution, sodium hydroxide solution, potassium hydroxide solution, are continuously added to the first reactor(s) in an amount such that a pH of 8 to 12.5 is set in the reactors which are thus fed,

c) the average residence time in the stages in the reaction cascade fed with acidic fresh sol is adjusted so that an average particle size of 27-72 nm is obtained in the final reactor in the cascade.

## Revendications

1.  Procédé en continu pour la préparation de sols de silice basiques aqueux contenant des particules de SiO$_2$ sphériques non agrégées ayant un diamètre moyen de 27 - 72 nm, à partir d'un sol frais acide qui contient 4 - 8 % en masse de SiO$_2$ sous forme de particules avant un diamètre moyen d'environ 2 nm à un pH de 2 - 4, et qui a été préparé par mise en contact d'une solution de silicate alcalin avec une résine échangeuse de cations sous la forme H, selon lequel on ajoute ce sol frais acide à une charge initiale contenant une solution aqueuse basique colloïdale de sol de silice ayant un pH supérieur à 8, une teneur en SiO$_2$ de 2-20 % en masse et une taille moyenne de particules de 14-27 nm, on ajoute en même temps des agents basiques à cette charge initiale, à des températures voisines du point d'ébullition de la charge initiale, en calculant la quantité d'agents basiques pour que le pH ne descende pas au-dessous de 8 pendant tout le procédé, et on continue l'addition de sol frais acide et d'agents alcalins jusqu'à ce que les particules aient un diamètre moyen de 27-72 nm et qu'il se produise une concentration des sols de silice basiques aqueux ainsi préparés, caractérisé en ce que

a) on amène en continu le sol frais acide dans les réacteurs d'une cascade de réactions à plusieurs étages, le premier étage contenant la charge initiale et chacun des réacteurs successifs de la cascade étant alimenté par le trop-plein du précédent, et le pH dans les réacteurs ne devant pas descendre au-dessous de 8,

b) on introduit en continu dans le premier ou dans les premiers réacteurs des agents basiques, de préférence une solution basique de silicate de sodium, une solution basique de silicate de potassium, une solution de soude, une solution de potasse, en une quantité telle qu'il s'établisse dans les réacteurs ainsi chargés un pH compris entre 8 et 12,5,

c) on règle les temps de séjour moyens dans les étages chargés de sol frais acide de la cascade de réactions de façon à obtenir une taille de particules moyenne de 27-72 nm dans le dernier réacteur de la cascade.